# EUROPEAN PATENT SPECIFICATION

(11) **EP 1 097 857 B1**
(45) Date of publication and mention of the grant of the patent: **08.02.2006**
(21) Application number: 00309296.2
(22) Date of filing: 23.10.2000
(51) Int. Cl.: B62D 25/08, B60N 2/28

(54) **Rear floor structure for vehicles**
Hintere Bodenwanne für Kraftfahrzeuge
Plancher de fond arrière pour véhicule automobile

(30) Priority: 02.11.1999 JP 31225599
(43) Date of publication of application: 09.05.2001
(73) Proprietor: DAIHATSU MOTOR COMPANY, LTD., Ikeda-shi, Osaka-fu 563-8651 (JP)
(72) Inventor: Chimura, Masao, Ikeda-shi, Osaka 563-0045 (JP)
(74) Representative: Whalley, Kevin

(56) References cited:
- EP-A- 0 936 104
- GB-A- 2 322 542
- US-A- 5 829 824
- US-A- 5 881 458

## Description

The present invention relates to a rear floor structure for a vehicle, and particularly to a rear floor structure which is constructed suitably for attaching a clocking metal member thereto for securing a child safety seat or the like to the vehicle body.

A rear floor structure of a vehicle body is known from EP-A-0 936 104.

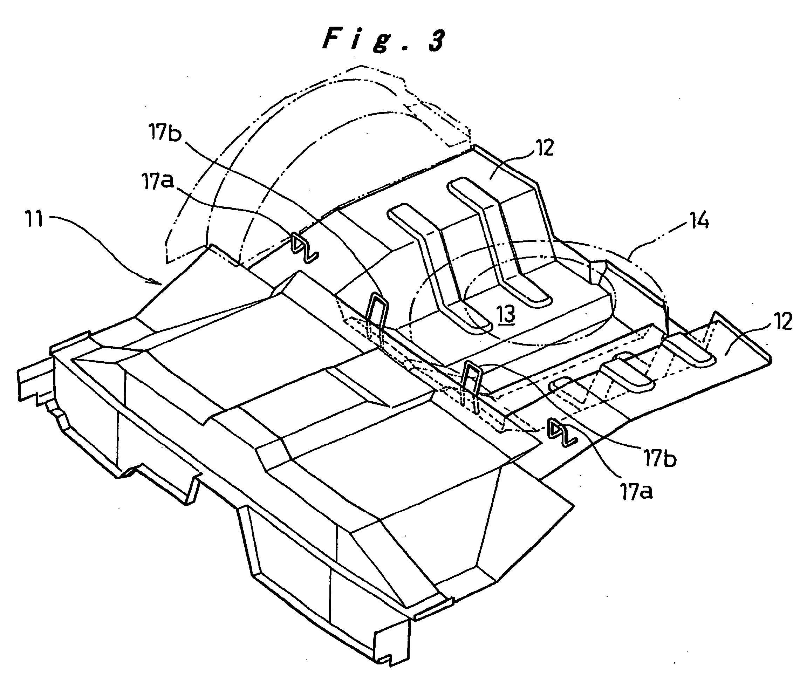

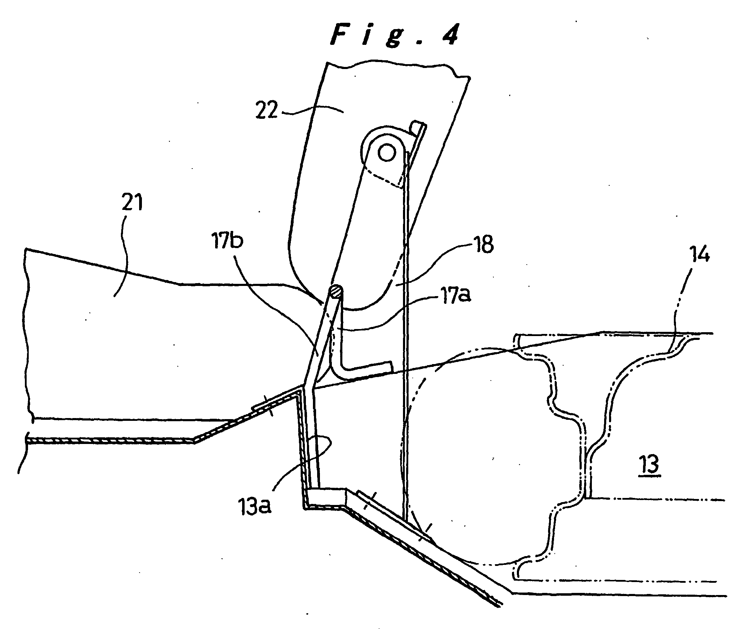

In a further known rear floor structure of a vehicle body, as shown in Figure 3 and Figure 4, a rear floor panel 11 has raised parts 12 on either side thereof in which a rear suspension mechanism is to be disposed and a recessed space 13 between these raised parts 12 for accommodating a spare tire 14.

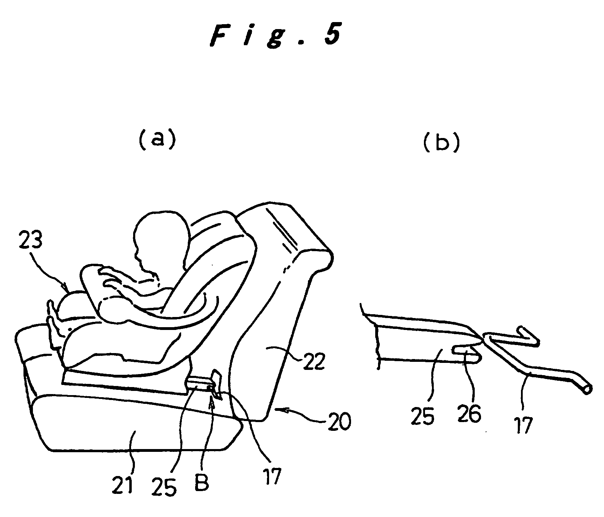

Figure 5(a) illustrates a mounting structure of a child safety seat on a seat of a vehicle according to ISO standards, in which a child safety seat 23 is arranged upon a seat 21 of a vehicular seat assembly 20, and secured to the vehicular seat assembly 20 at the rear end of the seat 21 and at the lower end of a seat back 22. As shown in details in Figure 5(b), a locking metal member 17 consisting of a rod that is bent to have a hat-like cross section is fixed on the vehicle side. The child safety seat 23 is equipped with a connector 25 that can be pulled out from the bottom, rear end thereof, so that the child safety seat 23 can be latchably secured to the vehicle body by inserting the locking metal member 17 into a locking groove 26 formed at the distal end of the connector 25.

The locking metal members 17 are provided in two pairs on both sides of the rear floor panel 11 as shown in Figure 3. As can be seen from Figure 3 and Figure 4, the outer pair of locking metal members 17a is welded at their bases onto the top face at the front end of the raised parts 12, while the inner pair of locking metal members 17b is welded at their bases to the front end face 13a of the recessed space 13. A rear seat back centre hinge 18, that is shown only in Figure 4, is formed upright from the bottom in the front end of the recessed space 13.

In such structure as shown in Figure 3 and Figure 4, the locking metal members 17a, 17b are extended upwards from their attachment bases for a rather long distance in order that their distal ends are located at predetermined positions. The attachment bases of the locking metal members 17 thus need to have high rigidity in order to ensure certain strength thereof, for which the thickness of the floor panel must be increased at the portions of these attachment bases, or additional brackets or the like must be.attached for reinforcement. Thus the above described conventional structure has several drawbacks in terms of cost, and the same applies to the mounting structure of the rear seat back centre hinge 18.

Furthermore, in order to mount the locking metal members 17 precisely at certain mounting pitch spaces with respect to each of the outer pair 17a and the inner pair 17b, base brackets that connect each pair of the locking metal members may be required, or, because the outer pair and inner pair of locking metal members 17 are welded to the vehicle body at different locations and in different states, complex jigs or tools are required when mounting these onto the vehicle body. Thus the cost for components and mounting operations is high.

The present invention was devised in view of the above described problems in the prior art, its object being to provide a rear floor structure of a vehicle body, to which locking metal members for mounting a child safety seat or a rear seat back centre hinge can be attached at low cost while ensuring necessary rigidity thereof.

To achieve the above object, the present invention provides a rear floor structure of a vehicle body, wherein a flat rear floor panel has raised parts on either side thereof and a recessed part between the raised parts for providing a storage space, and wherein a cross member is disposed in a transverse direction of the vehicle body (see US-A-5 829 824), characterised in that the cross member consists of a hollow bar having a square cross section and is disposed in a front end portion of the recessed part to bridge at least part of the recessed part and that a plurality of locking metal members for securing a child safety seat to the vehicle body and a rear seat back centre hinge are attached on the cross member.

Locking metal members are all mounted on a single cross member, and therefore, can be attached to the vehicle body at low cost with high operability and precision, without requiring any additional base brackets or complex tools. Even when a plurality of pairs of locking metal members are attached to the vehicle body, since they are all of a same shape, the cost for fabricating these components can be remarkably reduced. Furthermore, the locking metal members are given high rigidity since the distance between the attachment base and the distal end of the locking metal member is made short.

The rear seat back centre hinge, too, can have high support rigidity because it is attached on the cross member above the rear floor panel and its height is reduced, while the overall cost for attaching it to the vehicle body can be reduced.

The rear floor cross member can further be used according to needs, for example, for attaching a belt anchor for a seat belt, so that an additional anchor mount can be dispensed with, and the cost further reduced.

The rear floor structure of the present invention can favourably be applied to a vehicle body in which the rear floor has raised parts on either side thereof and a recessed part between the raised parts for providing a storage space, such that the rear floor cross member bridges the recessed part transversely in a front end portion thereof. That way, the safety feature of the vehicle can be enhanced because the cross member serves as a stopper bar for blocking a stored object such as a spare tire accommodated in the recessed space in the event that the vehicle receives an impact from the rear end.

Moreover, by connecting the either end of the rear floor cross member to the side walls of the vehicle body, its support rigidity can be increased, as well as the strength and rigidity in the transverse direction of the vehicle body can be increased.

Preferred embodiments of the present invention will be hereinafter described with reference to the drawings, in which:
Fig. 1 is a perspective view showing one embodiment of a rear floor structure for a vehicle according to the present invention;
Fig. 2 is a vertical, sectional side elevation view of the same;
Fig. 3 is a perspective view showing a conventional rear floor structure for a vehicle;
Fig. 4 is a vertical, sectional side elevation view of the same; and
Fig. 5(a) is an overall perspective view showing a child safety seat in an installed state and Fig. 5(b) is a detailed perspective view of part B in Fig. 5(a).

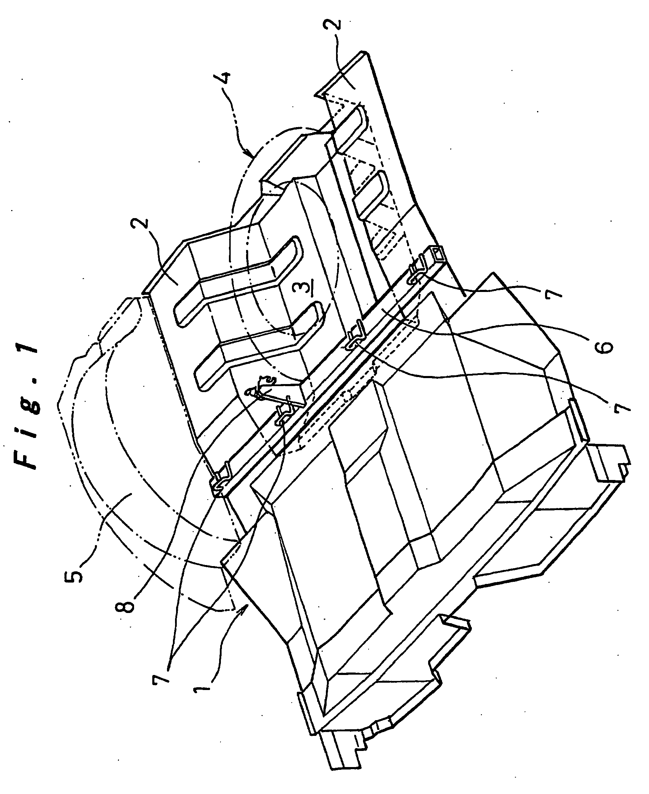

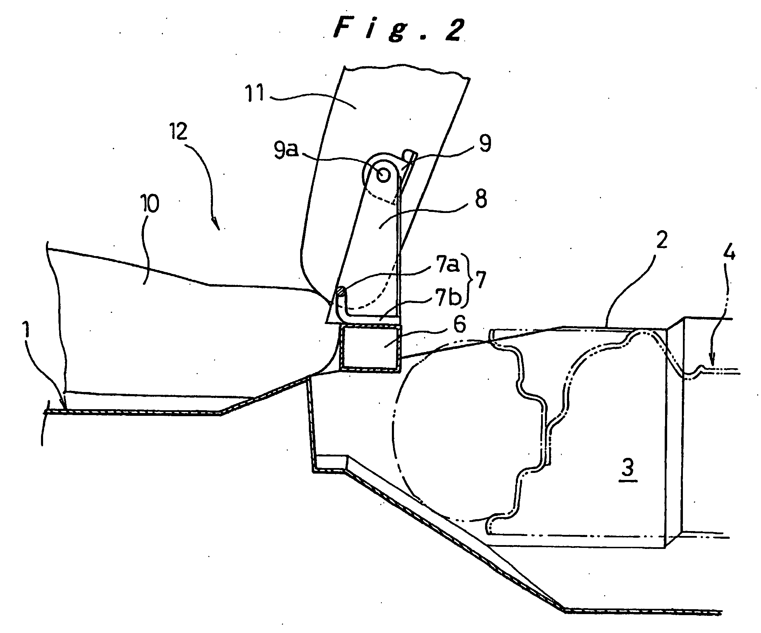

One embodiment of a rear floor structure of a vehicle body according to the present invention is described with reference to Figure 1 and Figure 2.

Reference numeral 1 in the drawings represents a rear floor panel. In the front end part upon this rear floor panel 1 is disposed a rear seat cushion 10 of a rear seat assembly 12. In the rear end part of the rear floor panel 1, raised parts 2 are formed on either side thereof that protrude upwards for providing a rear suspension mechanism. A recessed part 3 is formed between these raised parts 2, which is utilised as a storage space for accommodating a spare tire 4 or the like. Tire houses 5 for accommodating rear wheels are welded to the rear floor panel at the outer edges of the raised parts 2, as shown by phantom lines in Figure 1.

A rear floor cross member 6 consisting of a hollow bar having a square cross section is disposed at a front end portion of the recessed part 3 such as to bridge across the recessed part 3 in a transverse direction of the vehicle body. The either end of the rear floor cross member 6 is connected to side wall members such as rear side panels (not shown) of the vehicle body. Two pairs of locking metal members 7 for securing a child safety seat such as the one shown in Figure 5(a) and a rear seat back centre hinge 8 are attached on the top face of the rear floor cross member 6. The rear seat back centre hinge 8 pivotally supports a central portion of a rear seat back 11 of the rear seat assembly 12, so that the rear seat back 11 can be rotated between an upright seating state shown in Figure 2 and a flat position laid upon the rear seat cushion 10.

The locking metal member 7 consists of a rod that is bent to have a square U-shaped portion 7a having its open end downwards and a pair of attachment legs 7b extending backwards from the either lower end of the U-shaped portion 7a, and is attached onto the rear floor cross member 6 by welding the attachment legs 7b to the top surface of the rear floor cross member 6. The rear seat back centre hinge 8 is also welded at its lower end onto the top surface of the rear floor cross member 6, and is connected to the rear seat back 11 at the upper end thereof through a coupling bracket 9 that is rotatably supported on a pivot 9a.

According to the rear floor structure of the present invention described above, because a plurality of pairs of locking metal members 7 are attached on a single rear floor cross member 6 disposed above the rear floor panel 1, the locking metal members 7 can be mounted at predetermined positions at certain pitch spaces highly precisely with high operability without requiring any base brackets for positioning the locking metal members or specific tools, and thus at low cost. Since all of the locking metal members 7 to be attached can be made of a same shape, the cost for fabricating these components can be remarkably reduced. Moreover, because the locking metal members 7 are attached upon the rear floor cross member 6, the distance from the attachment legs 7 to the upper end of the U-shaped portion 7a can be made short; hence high mounting rigidity.

Also with respect to the rear seat back centre hinge 8, because it is attached on the rear floor cross member 6 above the rear floor panel 1, its height can be made short, whereby its support rigidity can be ensured while the cost is made low.

Furthermore, because the rear floor cross member 6 is disposed on the front end side of the recessed part 3 to bridge above the recessed part 3, the rear floor cross member 6 can serve as a stopper bar to block the spare tyre 4 accommodated in the recessed part 3 in the event that the vehicle is bumped from backside, and thus the safety feature of the vehicle is improved.

Moreover, since the either end of the rear floor cross member 6 is connected to the side walls of the vehicle body, not only the support rigidity of the locking metal members 7 and the rear seat back centre hinge 8, but also the strength and rigidity in the widthways direction of the vehicle body can be enhanced thanks to the rear floor cross member 6.

Although not illustrated in the drawings, it should go without saying that additional parts such as belt anchors for seat belts can also be attached on the rear floor cross member 6, which is obviously advantageous in terms of cost reduction.

## Claims

1. A rear floor structure of a vehicle body, wherein a flat rear floor panel (1) has raised parts (2) on either side thereof and a recessed part (3) between the raised parts for providing a storage space, and wherein a cross member (6) is disposed in a transverse direction of the vehicle body, **characterised in that** the cross member (6) consists of a hollow bar having a square cross section and is disposed in a front end portion of the recessed part to bridge at least part of the recessed part (3) and that a plurality of locking metal members (7) for securing a child safety seat to the vehicle body and a rear seat back centre hinge are attached on the cross member (6).

2. The rear floor structure of a vehicle body according to Claim 1, wherein either end of the cross member is connected to side walls of the vehicle body.

## Revendications

1. Structure de plancher arrière d'une carrosserie de véhicule, dans laquelle un panneau de plancher arrière plan (1) comporte des parties surélevées (2) sur chacun de ses côtés et une partie renfoncée (3) entre les parties surélevées pour fournir un espace de stockage, et dans laquelle une traverse (6) est disposée dans une direction transversale de la carrosserie de véhicule, **caractérisée en ce que** la traverse (6) est constituée d'une barre creuse présentant une section transversale carrée et est disposée dans une partie avant de la partie renfoncée pour chevaucher au moins une partie de la partie renfoncée (3) et **en ce qu'**une pluralité d'éléments de fixation métalliques transversaux (7), pour fixer un siège de sécurité pour enfant à la carrosserie de véhicule et à la charnière centrale de dossier de siège arrière, sont fixés sur la traverse (6).

2. Structure de plancher arrière d'une carrosserie de véhicule selon la revendication 1, dans laquelle chaque extrémité de la traverse est raccordée aux parois latérales de la carrosserie de véhicule.

## Patentansprüche

1. Hintere Bodenwanne einer Fahrzeugkarosserie, bei der ein flaches hinteres Bodenblech (1) erhobene Teile (2) auf jeder Seite desselben und einen vertieften Teil (3) zwischen den erhobenen Teilen aufweist, um einen Ablageraum bereitzustellen und bei der ein Querträger (6) in einer Querrichtung der Fahrzeugkarosserie angeordnet ist, **dadurch gekennzeichnet, dass** der Querträger (6) aus einem Hohlprofilstab besteht, der einen quadratischen Querschnitt aufweist und in einem Frontpartieteil des vertieften Teils angeordnet ist, um mindestens einen Teil des vertieften Teils (3) zu überbrücken und dass zum Befestigen eines Kindersicherheitssitzes an der Fahrzeugkarosserie und an dem Rücksitzlehnen-Mittelgelenk eine Vielzahl von Verschlussmetallelementen (7) am Querträger (6) angebracht sind.

2. Hintere Bodenwanne einer Fahrzeugkarosserie nach Anspruch 1, bei der jedes Ende des Querträgers mit den Seitenwänden der Fahrzeugkarosserie verbunden ist.
